# EUROPEAN PATENT APPLICATION

(11) **EP 1 043 104 A2**
(43) Date of publication of application: **11.10.2000**
(21) Application number: 00850054.8
(22) Date of filing: 23.03.2000
(51) Int. Cl.: B23D 61/14

(54) **Band saw blade for soft and tough metal**

(30) Priority: 08.04.1999 US 288497
(71) Applicant: Kapman AB, 811 81 Sandviken (SE)
(72) Inventor: Hayden, Robert C., Sr., Branford, Connecticut (US)
(74) Representative: Taquist, Lennart

(57) **Abstract**

A band saw blade for stable, vibration-free high precision cutting of tough and soft metals such as titanium ingots, where the teeth (10) in comparison to traditional metal band saw blades have greater rake angle (11), 12 to 18 degrees, and smaller clearance angle (12) 5 to 8 degrees, the teeth being set and having constant pitch distance.

## Description

### Background

The optimal shape and characteristic angles of the teeth of saw blades varies a within a wide range depending on the material to be cut. One general rule is that materials which form long chips, like wood when cut along the fibers, requires large positive rake angles, for wood usually 20 - 30 degrees, whereas materials forming short chips, such as carbon steel, cast iron or wood, when cut across the fibers, requires small rake angles, usually from 5 degrees negative to 10 degrees positive. One reason for this is that long chips will slide a long distance against the rake face causing friction and a corresponding vertical force which can be balanced by the vertical component of the pressure from the chip onto the rake face, in order to keep the feed force small but positive. For material forming short fragile chips, a small angle is chosen to make the chips curl and fracture soon, without causing much friction. Using a large positive rake angle for such materials would make the teeth self-feeding with negative feed force, which makes a saw blade unstable and vibrating.
To some extent the friction force on the rake face is also balanced by pressure on a small wear land on the clearance face when sawing metals. It is well known that saw blades even with small positive rake angles do not cut without vibration until after a short running-in period during which the edge becomes slightly rounded including a wear land on the clearance face, or after a manufacturing step including abrasive treatment of the edges to get the same geometry as after running-in.
Certain soft but tough metals are extremely difficult to saw, since they will never form fragile chips. Examples of this are austenitic stainless steel or titanium. The present invention concerns a tooth shape suitable for such difficult materials, and a band saw blade provided with such teeth.

### Description

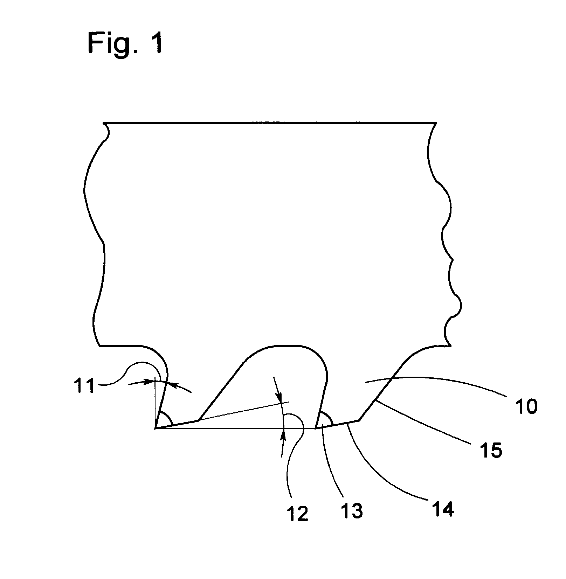

A saw blade according to the present invention is described with reference to the figure which shows a lateral view of a short portion of the saw blade with a couple of teeth. The tooth shape is characterized by the rake angle (11) and the clearance angle (12) which determine the feed force and its dependence upon the cutting depth. The distance from one tooth tip to the next is the pitch distance which may be equal for all teeth or variable.

Saws for metal cutting according to prior art have rake angles in the range from negative 5 degrees to positive 12 degrees according to U.S. Patent No. 5,018,421 and 4,292,871. Larger rake angles have only been used for wood cutting, where the pressure of the chip against the rake face is so low that there is little risk of instability and negative feed forces.
According to prior art, the clearance angle is from 10 to 37 degrees. The lower values are chosen when the tooth tip is made from cemented carbide, where any wear land develops very slowly, and the higher values are chosen when the tooth tip is made from high speed steel, where a wear land develops rather quickly.
According to the invention, a band saw for cutting of tough and soft metals such as titanium should have teeth (10) with cemented carbide tips (13) and larger rake angle (11) and smaller clearance angle (12) than previously used, preferably 12 to 18 degrees rake angle and 5 to 8 degrees clearance angle. The teeth should be set, with some teeth straight, some set to the right and some set to the left as is known in prior art. All teeth should preferably have straight cutting edges without chamfers.
Teeth with angles in the ranges known from prior art will cut most metals stably unless the length of the cut is so great that more than five teeth ar cutting simultaneously. In such cases the performance is known to be improved by making the teeth with variable pitch distances, allowing a length of the cut about 15 to 20 times the average pitch distance.
When cutting tough and soft metals with large thickness, such as titanium ingots with length of the cut more than ten times the tooth pitch, no saw blade according to prior art has been able to cut without severe vibrations, not even with variable pitch. Experiments have shown, however, that a 80 mm wide band saw with 25 mm pitch has been successfully used to make cuts longer than 50 times the pitch distance with high precision and without vibrations, due to the inherent stability of the chip formation process at a tooth according to the invention. In the experiment, it was even possible to use a constant pitch, which in turn allows more gullet space between teeth.
To get optimal gullet space, the clearance face (14) with small angle 5 to 8 degrees extends only a limited distance behind the cutting edge, no more than 30 % of the pitch distance, and behind that the angle (15) becomes much steeper, 40 to 50 degrees.

## Claims

1. Band saw blade for cutting tough and soft metals, comprising teeth with tips of cemented carbide, characterized by said teeth having a rake angle 12 to 18 degrees and a clearance angle 5 to 8 degrees, some teeth set to the right, some teeth set to the left and some teeth straight.

2. Band saw blade according to claim 1, where all of said teeth have equal height.

3. Band saw blade according to claim 1 or 2, where all of said teeth have equal pitch distance.

4. Band saw blade according to claim 1, where the part of the clearance face of the teeth having a clearance angle 5 to 8 degrees extends for no more than 30 % of the pitch distance.
